# EUROPEAN PATENT APPLICATION

(11) **EP 2 211 518 A2**
(43) Date of publication of application: **28.07.2010**
(21) Application number: 10151219.2
(22) Date of filing: 20.01.2010
(51) Int. Cl.: H04L 29/06

(54) **A technical system located in the firmware / OS-kernel of an e-mail gateway or firewall to protect the infrastructure or operating system against DDoS attacks**

(30) Priority: 22.01.2009 CH 1022009
(71) Applicant: Blapp, Martin, 4416 Bubendorf (CH)
(72) Inventor: Blapp, Martin, 4416 Bubendorf (CH)

(57) **Abstract**

A technical system in the firmware/kernel to protect mail gateways against overload- and downtime-situations, most notably against DDoS-attacks, without redirecting, tagging, modifying and directly blocking any SMTP-connections in connection with a IP-address based whitelist. The system only affects the smtp protocol and protocols based on top of the SMTP protocol like SMTPS. Heavy load situations caused by those DDoS attacks, or many simultaneous connections from different originating IP-addresses accessing software/hardware at the same time, can lead to software or hardware deadlocks or to very slow unresponsive reply times of the underlying operation system (OS) and the software running within the operating system.

## Description

The system is placed directly in the kernel/firmware [1] of the operating system of a mail gateway [2] and delays certain attacker SMTP [3] connection attempts [4] during DDoS attacks [5] while allowing normal SMTP-traffic to pass after the kernel has looked up an internal kernel exception list [6] and found a match. Those "whitelisted" connections are then directly handed over to the mail transfer agent in the underlying operating system as usual without a filter in place. The system only affects the SMTP protocol and protocols based on top of the SMTP protocol like SMTPS.

Delayed connections can include all socket connections beside the whitelist, or connections with some special metrics, notably special window sizes and special TCP/IP options [7]. The system doesn't modify [8], tag [9], forward [10] or block [11] any connections, it only has one or more fixed size listen queues [12] which can overflow with the FILO [13] method in use. Traditional mail-gateways work with the FIFO[14] method. While it is still possible for an internal kernel firewall to tag, forward, block and use QoS [15] methods, the only method this new system needs is to delay sockets with any suspicious [16] SMTP-connections up to 300 seconds in the kernel and to force the connecting relay to wait for this time frame until the kernel does send the SMTP greeting banner [17]. The filtering/interfering of the waiting tcp sockets is based on an already published concept called accept filter [18].

A mail gateway with this SMTP-delay concept can handle a lot more SMTP traffic and is immutable against direct attacks originating from big botnets [19]. Because the socket memory footprint in the OS-Kernel is a lot smaller than it is in userland [20], such a system can handle much more traffic until the mail gateway hits some connection limits [21] for suspicious connections. And the system does save CPU-context switches [22] because it doesn't have to forward all connections directly to the mailserver application in userland. The benefit of this concept is to save CPU resources, ensure system stability and to allow the user to consolidate two or more mail gateways down to only one server.

### New invention value:

Traditional DDoS protection systems are working with blacklisting or data scrubbing functionality or they are redirecting bad traffic to some other destination.

See patents: WO0233870A2, CN1968147A, EP1691529A1, WO2004068285A2, WO03017613A1.

The system presented doesn't need those methods; it only works with delaying certain connections for a defined sleep time and up to some hard-coded queue limit count and allows even "bad" connections to reach the mail transfer agent after they have passed the sleep delay. Systems containing such a sleep delay already exist, but they all take place in the userland part of an operating systems where they cause huge memory/CPU usage and can possibly lead to deadlock/starvation situations.

### Vocabulary / explanations

[1] A kernel is part of the operating system which directly talks to hardware. A kernel can run embedded in hardware, or it can sit on top of the hardware. The invented system only works in the kernel context.
[2] E-Mail gateways are servers which forward e-mails to remote servers, or forward them to local e-mail boxes. A email gateway can handle internal or external traffic. The invented system only works with gateways exposed to the internet.
[3] SMTP stands for Simple Mail Transfer Protocol and is one of the oldest protocols sitting on top of TCP-IP.
[4] An attacker can open one or more SMTP-connections without sending any data. The invented system keeps those connections open without sending them to the responsible e-mail gateway application.
[5] DDoS, distributed denial of service attacks are connection attempts from many different originating IP-addresses with the goal to take the attacked server out of service or to crash the underlying operating system.
[6] The kernel exception list can include IP-addresses or ip-subnets or can stay empty.
[7] The mentioned methods are well known as OS-Fingerprinting (OSFP).
[8] Modifying connections means to modify the content of the connections, or to tag the sockets.
[9] Tagging connections means to mark them in the API without to modify the content.
[10] Forwarding connections means to forward them to a different system which can treat them differently
[11] Blocking means to directly terminate sessions based on blacklists or the connection behaviour. The invented system can reject connections too, but only if the waiting queue is full. The mechanism is similar to system wide connection limits.
[12] A listen queue is a concept known from UNIX systems. It means a queue of waiting sockets before they are accepted by the application in the operating system.
[13] FILO means first in, last out
[14] FIFO stands for first in, first out
[15] QoS, Quality of Service is a system to guarantee certain service quality for choosed connections.
[16] Suspicious connections can include all IP-addresses beside the IP-addresses contained in the whitelist, or they can result from OS-fingerprinting.
[17] The SMTP protocol urges the client to wait for an initial server greeting banner. The timeout for this waiting period is 300 seconds
[18] The accept filter concept was pioneered by David Filo at Yahoo! and refined to be a loadable module system by Alfred Perlstein. The accept filter concept has been published June 25, 2000 to the FreeBSD UNIX operating system.
[19] Botnets are huge collection of hacked systems which are controlled centrally from automated computer programs (bots). The main use of those botnets is sending spam or to attack computer systems.
[20] Userland means all applications running in the operating system with exception of the kernel and all modules running in the kernel context.
[21] There exist global connection limits, which are the maximum of connections a system can handle at the same time, or per application connection limits based on the responsible protocol. The connection limits can also include per source-ip limits.
[22] Is the process of storing and restoring the state (context) of a CPU such that multiple processes can share a single CPU resource. The context switch is an essential feature of a multitasking operating system. Context switches are usually computationally intensive and much of the design of operating systems is to optimize the use of context switches. A context switch can mean a register context switch, a task context switch, a thread context switch, or a process context switch. What constitutes the context is determined by the processor and the operating system.

### Figure descriptions:

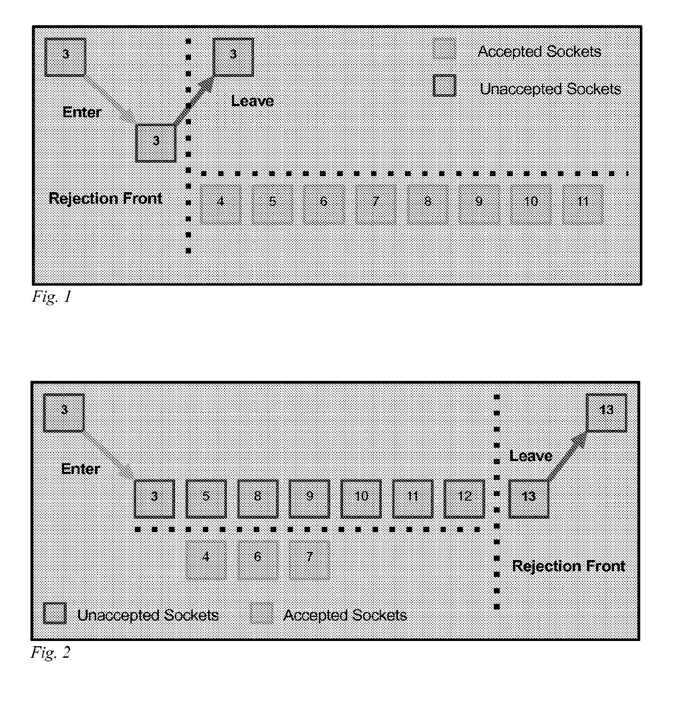

**Fig. 1** FIFO queing without the accept filter in place. Shows an unmodified operating system under massive load situations. The system does reject all connections and can't destinguish between attacker and normal connections
**Fig. 2** FILO queing with the accept filter in place. Shows one listen queue of an operating system with a smtp accept filter in place. The connections are sleeping for a predefined interval in the kernel

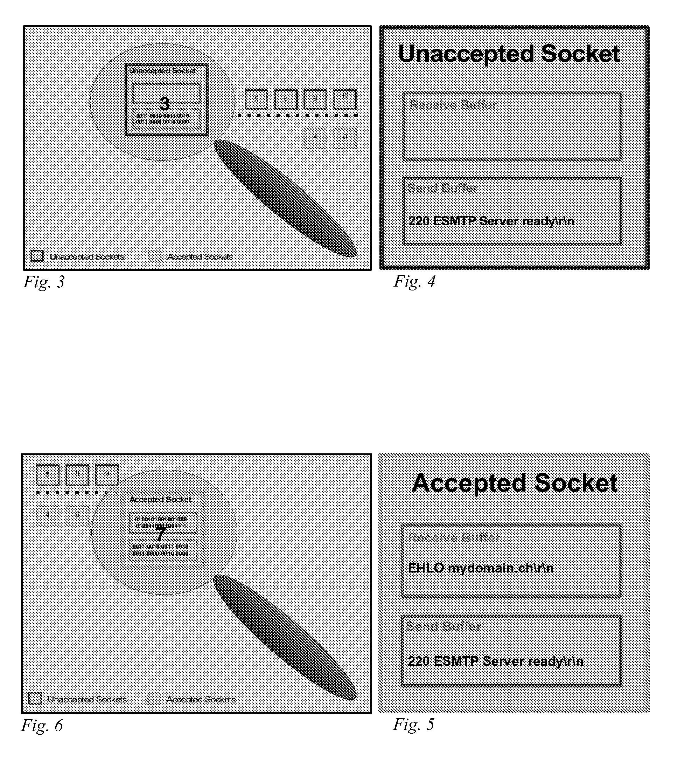

**Fig. 3** View of an unaccepted socket
**Fig. 4** Same picture as fig. 3, but it shows the content of an unaccepted socket. The receive buffer of the socket doesn't contain any data yet.
**Fig. 5** View of an accepted socket
**Fig. 6** Same picture as fig. 5, but it shows the contents of an accepted socket. The receive buffer contains already data and the socket may have been passed to the application

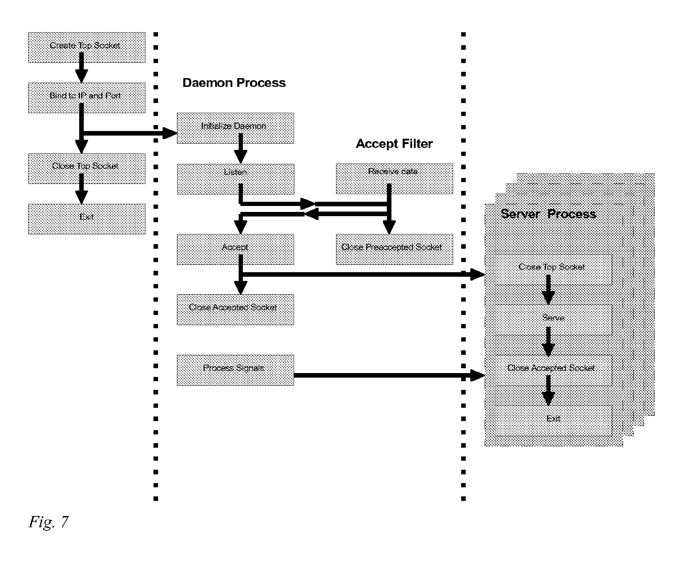

**Fig. 7** Shows where the smtp accept filter takes place in the unix network socket model

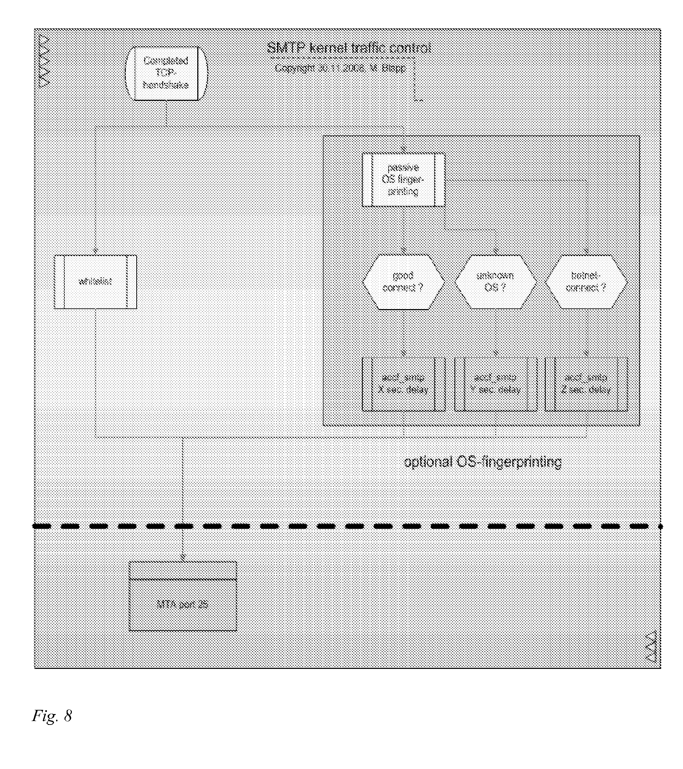

**Fig. 8** The invented workflow with the internal kernel whitelist and the possible additional OS-fingerprinting part. There are several e-mail queues with different sleep times defined.

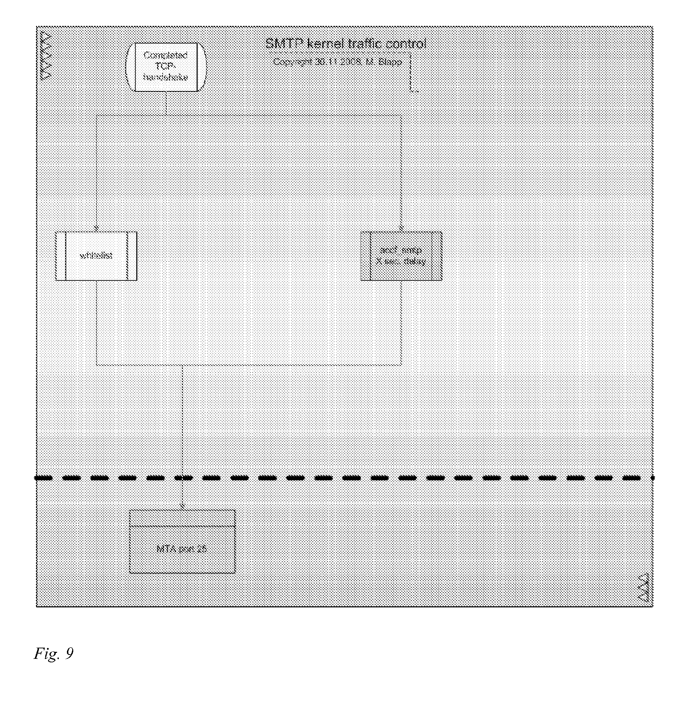

**Fig. 9** The invented workflow with just the internal kernel whitelist and one active accept-filter with a defined sleep timeout X.

## Claims

1. The lightweight greetpause sleeping method for the SMTP protocol in the kernel (accf_smtp) which keeps the connections open without to spend CPU resources

2. The combination of smtp accept filtering in claim [1] with an firmware/kernel internal whitelist or exceptionlist

3. The combination of the passive OS-fingerprinting (OSFP) method with claim [1] and claim [2], which is used to identify attacker and spammer SMTP connections while still allowing the other connections to pass

4. The use of [1], [2], [3] for the intention to filter spam as a sideeffect of the DDoS protection

5. The system can use one or more different sleep times in claim [1] for the SMTP traffic which has been identified by OSFP to be possibly DDoS traffic or spam

6. The defender-system claim [1] can be run one or more times in parallel (multiple use of accf_smtp and multiple instances of connected mail transfer agents in the userland) on the same firmware/kernel system and take benefit of the different sleep times
